# EUROPEAN PATENT APPLICATION

(11) **EP 1 136 042 A1**
(43) Date of publication of application: **26.09.2001**
(21) Application number: 00105887.4
(22) Date of filing: 20.03.2000
(51) Int. Cl.: A61C 17/22, A61C 9/00

(54) **System, method and device for personalized toothbrush**

(71) Applicant: Kevehazi, Laura Mann, Dr., Savion 56530 (IL)
(72) Inventor: Kevehazi, Laura Mann, Dr., Savion 56530 (IL)
(74) Representative: VOSSIUS & PARTNER

(57) **Abstract**

A system for matching the shape of a toothbrush to the oclusal (chewing surface of the teeth) regarding both size and shape (angles of the chewing surface), and to a device implementing the system.

The system provides a variety of differently shaped toothbrushes, as well as the means for choosing the closest possible match between the size and shape of the posterior teeth and the brush.

The device comprises: a housing (1) provided with means (5) for placing the imprint thereon; a sensor (12) adapted to scan the imprint; and display means (7) for displaying the result of the scanning.

## Description

The present invention relates to a system for matching the shape of a toothbrush to the oclusal (chewing surface of the teeth) regarding both size and shape (angles of the chewing surface), and to a device implementing the system.

The system provides a variety of differently shaped toothbrushes, as well as the means for choosing the closest possible match between the size and shape of the posterior teeth and the brush - therefore meeting the requirements of close contact between the bristles of the toothbrush and pits and fissures of the chewing surface.

A wide variety of toothbrushes on the market today differ in bristle length, hardness, angle and shape of the handle and the like. Up to now no individually fitted toothbrushes have been available on the market. As opposed to the anterior teeth which are flat and therefore easier to brush the oclusal surface of the posterior teeth with its pits and fissures represents the main starting point of dental decay (cavities). The importance of close contact between the brush and the oclusal surface is thus obvious.

The invention relates to a system for optimizing a toothbrush supplied to a customer according to the chewing surface (both shape and size).

The system comprises the following steps:
- obtaining an imprint of the chewing surface of a person in a suitable sterile medium such as wax (sterilized, individually packed and disposable);
- removing the imprint from the mouth and transferring it to an examining and scanning device;
- the device - evaluates the imprint regarding size and shape, and indicates which type of toothbrush from a selection of different shapes of toothbrushes is suitable. Therefore, the best approximated match for that specific customer is acquired.

The invention further relates to a device adopted to scan and evaluate the imprint which comprises: 1 a housing provided with means for placing the imprint thereon; 2 a sensor adapted to scan the imprint; 3 and display means for displaying the result of the scanning.

In practice, the individual bite impression can be obtained by using a horse shoe shaped form containing a suitable material such as wax which is introduced between the teeth of the customer. The person bites on it, removes it from his/her mouth, inserts it into the brush match device which after evaluating the imprint provides a numeric answer.

The evaluation of the imprint is based on electronic scanning of parameters, established beforehand, and relates it to the available models of toothbrushes.

The numeric answer indicates which specific toothbrush is appropriate and matches the customers anatomic tooth and mouth shape.

The invention will now be described with reference to the annexed drawings in which:

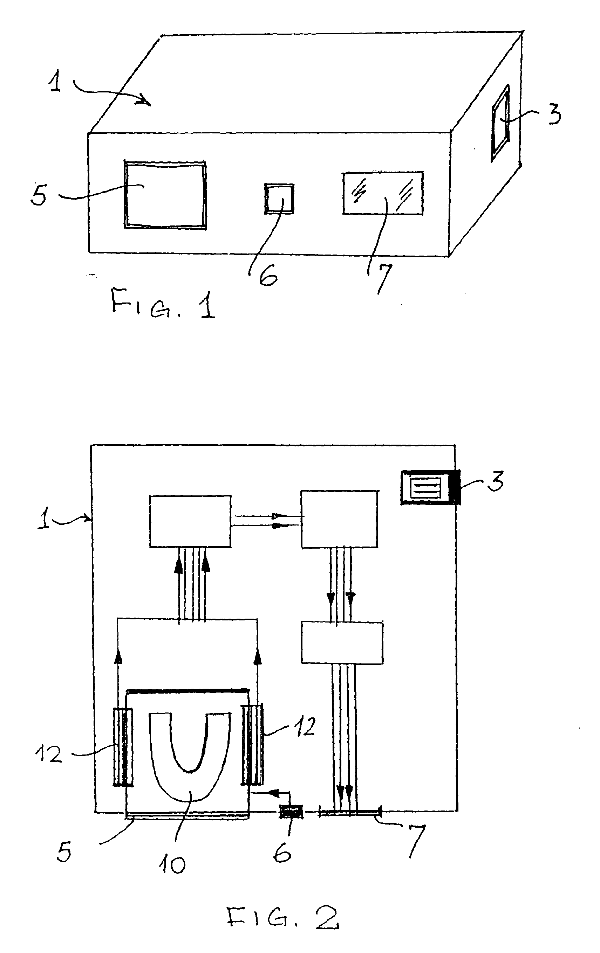

**Fig. 1** is a schematical illustration of the device.
**Fig. 2** illustrates the various components of the device.

The device comprises housing **1** provided with external on/off switch **3.** A drawer **5** is provided for placing thereon the imprint **10** for scanning and evaluation.
Push-button **6** activates drawer **5** for placing the imprint **10** thereon. Screen **7** would display the results of the scanning. Imprint **10** is placed on or in drawer **5.** Scanning means **12** would analyze the tooth impression by one of the following methods:
1. Infra red sensors (I.R.);
2. Differential resistance (Resistors);
3. Three-dimensional video analyzers based on two cameras and an image data microprocessor card;
4. Volume displacement/impedance sensors.

Any of the above methods could be used and provide the required data to the amplifier **11,** which in turn would transfer it to the reference to data base (memory) **9** for evaluation. Once the evaluation is completed the result will be forwarded to driver **8** to be displayed on screen **7.**

It is clear that the number of different toothbrushes is limited being a matter of practical choice, but the set of toothbrushes which accompanies the evaluating device, includes sufficient variations (assuming 5-10 types) meeting customers requirements.

This provides the customer with a toothbrush that enables him/her to achieve by far superior brushing results in terms of plaque removing action lowering his/her dental decay risk.

## Claims

1. A system or method for optimizing a toothbrush supplied to a customer according to the chewing surface which comprises the steps of:
a. obtaining an imprint of the chewing surface of a person in a suitable sterile medium,
b. removing the imprint from the mouth and transferring it to an examining and scanning device;
c. evaluating the imprint regarding size and shape, and indicating which type of toothbrush from a selection of different shapes of toothbrushes is suitable.

2. A system for optimizing a toothbrush which comprises a device adapted to scan and evaluate the imprint which comprises: a housing provided with means for placing the imprint thereon, scanning means adapted to scan the imprint, a memory unit for evaluating the results and display means for displaying the result of the scanning.

3. The system or method as claimed in claim 1 where the imprint or bite impression is obtained by a horse-shoe shaped form.

4. The system or method as claimed in claim 3 where said horseshoe form is filled with wax.

5. A system as claimed in any of claims 1 to 4 where said scanning means or sensor is an infra red (I.R.) sensor.

6. A system as claimed in any of claims 1 to 4 where said scanning means or sensor is a differential resistor.

7. A system as claimed in any of claims 1 to 4 where said scanning means or sensor is a three dimensional video based on two cameras and an image data microprocessor card.

8. A system as claimed in any of claims 1 to 4 where said scanning means or sensor is volume displacment/impedance sensors.

9. An apparatus for carrying out the method of claim 1.
